Europäisches Patentamt

**European Patent Office**

**Office européen des brevets**

(19)

(11) Publication number: **0 325 888**
**A1**

(12) # EUROPEAN PATENT APPLICATION

(21) Application number: **88630012.8**

(51) Int. Cl.⁴: **B60Q 1/52**

(22) Date of filing: **28.01.88**

(43) Date of publication of application:
**02.08.89 Bulletin 89/31**

(84) Designated Contracting States:
**AT BE CH DE ES FR GB GR IT LI LU NL SE**

(71) Applicant: **Curwood, Robert Joseph**
**56 Aberdeen Street**
**Geelong West Victoria 3218(AU)**

(72) Inventor: **Curwood, Robert Joseph**
**56 Aberdeen Street**
**Geelong West Victoria 3218(AU)**

(74) Representative: **Waxweiler, Jean et al**
**OFFICE DENNEMEYER S.à.r.l. P.O. Box 1502**
**L-1015 Luxembourg(LU)**

(54) **Signal device.**

(57) An emergency or warning signal system has a transmitter unite (2) associated with an emergency vehicle and a receiver unit (8) associated with a road vehicle. Actuation of a switch in the emergency vehicle will cause the transmission of a warning signal. Upon receipt of the warning signal by the receiver unit (8) an audio and/or visual signal will be displayed to the driver of the road vehicle.

Fig. 1.

Fig. 2.

EP 0 325 888 A1

This invention relates to a signal device.

In a particular aspect this invention relates to an emergency signalling device.

In a particular aspect of this invention relates to a signal device and a signal receiver device.

An emergency vehicle such as police, ambulance and fire engines are commonly fitted with emergency indicating lights and sirens or other sound generators to indicate to other road users that the vehicle is attending an emergency and that other road users should keep clear.

However, such lights will only be visible to those road users having a line of sight to the emergency vehicle and hence cannot be seen around a corner or if a particular road user is not watching.

Further, such sirens or other sound generators may not be heard.

This last is a particular problem having regard to the frequent use by road users of air conditioning systems, car radios or car sound reproduction systems.

Similar problems exist with respect to certain warning devices such as railway crossing signal lights service vehicles and road work lights.

The present invention provides an emergency or warning signal system comprising a transmitter unit adapted to be associated with an emergency vehicle or warning device and actuable to transmit a first signal and a receiving unit adapted to be associated with a road vehicle and adapted to receive said first signal and in consequence thereof to produce in use a second signal perceivable to a user of said road vehicle.

Preferably, said transmitter unit and said receiver unit are such as to have an effective range of not less than 100 metres and not more than 1000 metres more preferably not less than 200 metres and not more than 500 metres. An effective range of about 250 to 350 metres is most preferred.

Said second signal may be one or both of a light signal and a sound signal.

The transmitting unit is preferably able to transmit said first signal at a frequency having at least local, preferably state, more preferably national and most preferably international agreement.

The transmitting unit is preferably actuable to transmit said first signal on actuation of other signal means such as lights, sirens or other sound generating means. In this last respect, a combined operating switch may be provided.

The receiving unit is preferably placed in a condition to receive said first signal and to produce said second signal at all times that said road vehicle is in use. To this end, the receiving unit is preferably so connected to said road vehicle's electrical system so as to be in said condition when said road vehicle is in use.

The receiving unit may be associated with a car radio, tape player or other sound reproduction apparatus suitable for use in a motor vehicle. In this event it is preferred that means be provided to at least diminish or suppress any sound signal being emitted by said car radio, tape player or other sound reproduction apparatus at such time as said second signal is being produced.

Alternatively or additionally the receiver unit may utilize amplifier and/or speaker means of a car radio, tape player or sound reproduction apparatus suitable for use in a motor vehicle.

The present invention also provides said transmitter unit for installation into an emergency vehicle.

The present invention also provides said receiver unit for installation into a road vehicle.

Systems in accordance with this invention will now be described with the aid of the accompanying drawings in which

Fig 1 and Fig 2 are block diagrams of a first system,

Figs 3 and Fig 4 are block diagrams of a second system and,

Fig 5 is a block diagram of a receiver module and,

Fig 6 is a variant module.

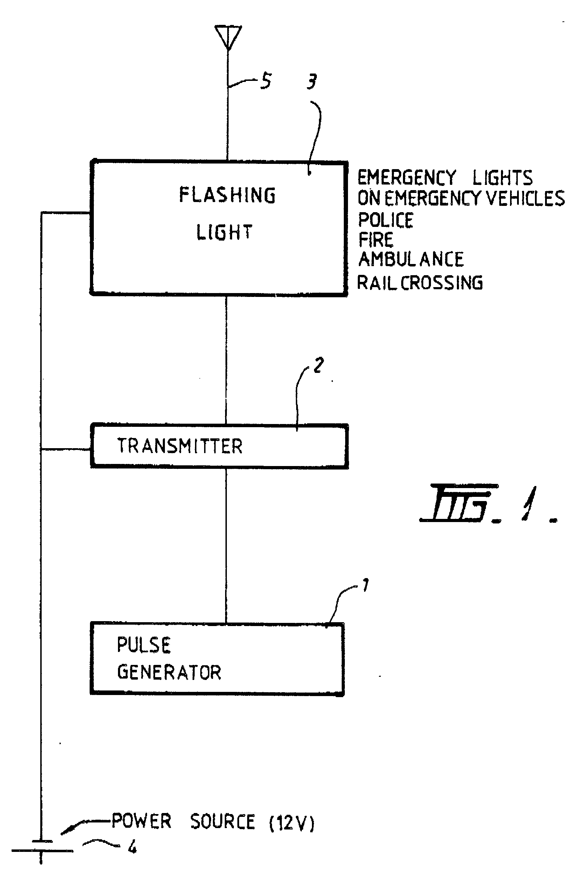

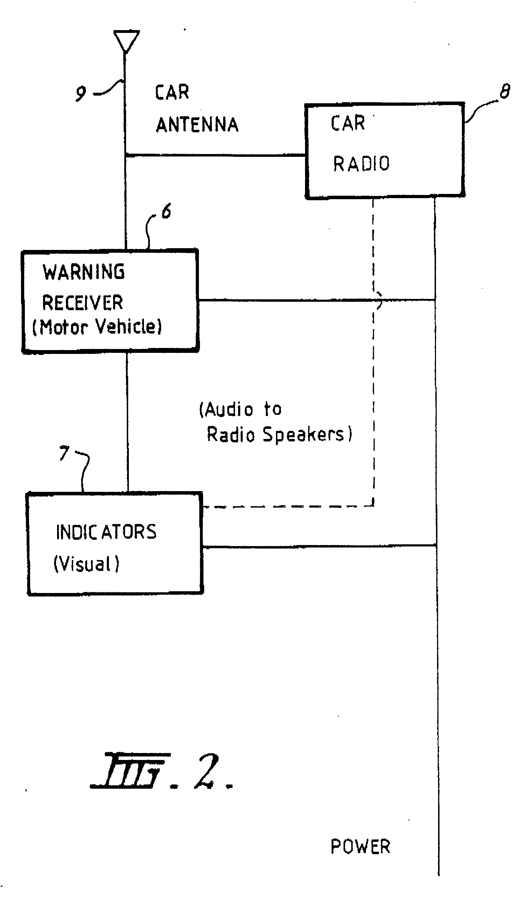

The first system shown in Figs 1 and 2 comprises a pulse generator 1, a transmitter 2 and a flashing light 3 located in an emergency vehicle and actuable by switch means (not shown) connected to a power source 4 to transmit a signal via an antenna 5 of the emergency vehicle.

The system further comprises a warning receiver 6, an indicator 7 and optionally an audio connection to a car radio speaker 8 in a road vehicle and connected to an antenna 9 thereof.

In use, actuation of the switch in the emergency vehicle will cause operation of the flashing light and transmission of a warning signal.

That warning signal can be received by the receiver to give an indication on the indicator and perhaps also an audio signal via the car radio speaker.

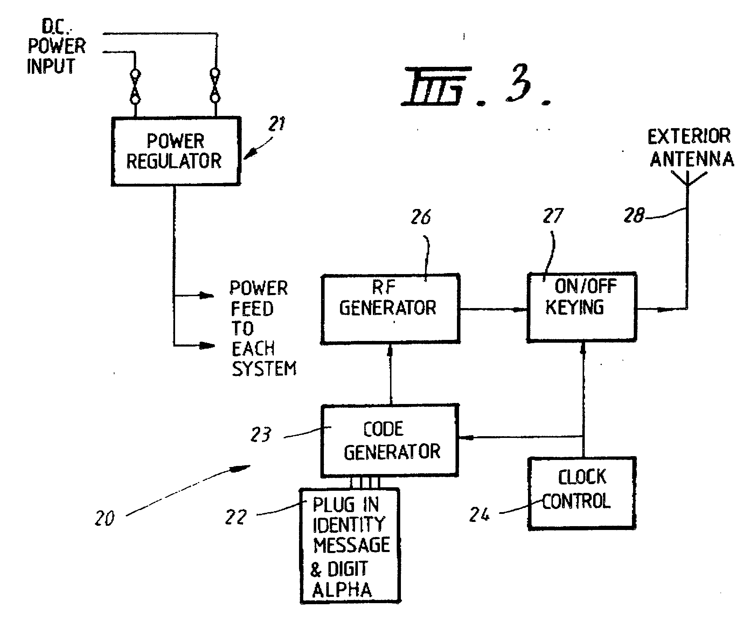

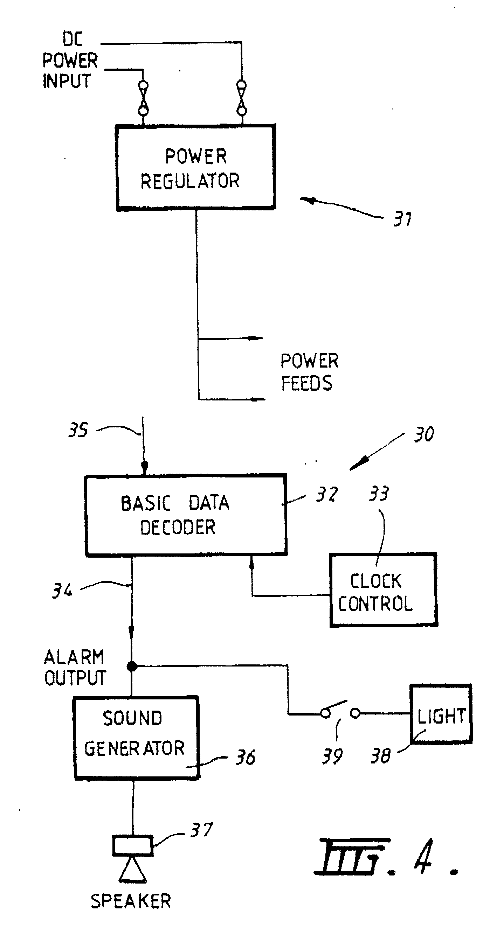

With respect to Figs. 3 and 4, there is shown in Fig. 3 a transmitter unit 20 having a power supply 21, and identity unit 22, a code generator 23, a clock control 24, a RF generator 26, an on/off device 27 and an exterior antenna 28.

In Fig 4 is shown a output unit 30 having a power supply 31, a basic datadecoder 32 with an input 35, a clock control 33, an alarm output line 34 connected to a sound generator 36 and a speaker 37 and a light 38 connected via a switch 39.

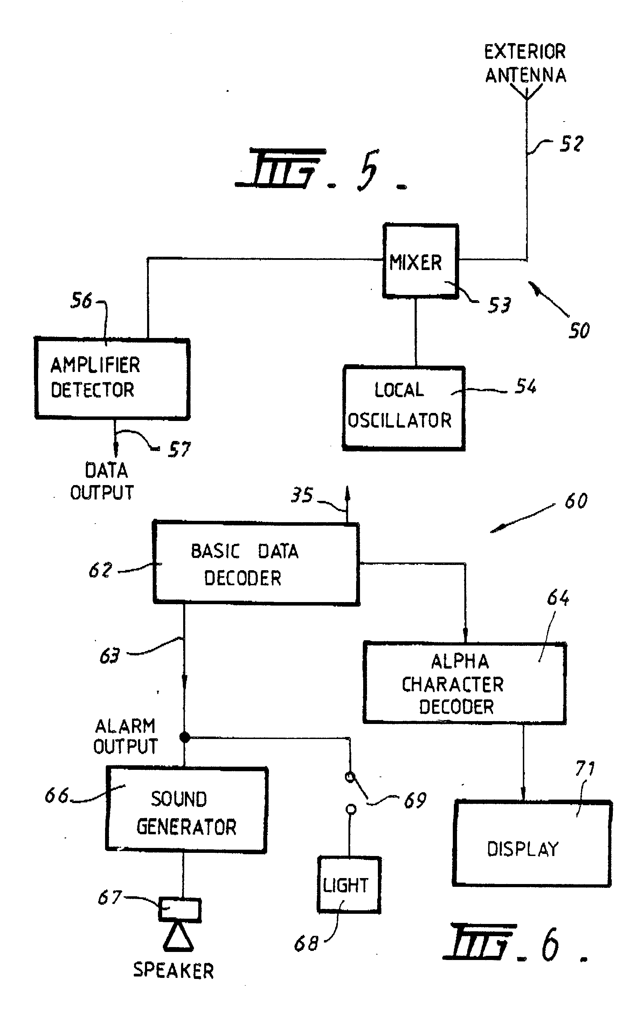

In Fig 5 there is a module 51 comprising an antenna 52, a mixer 53, a local oscillator 54, an amplifier detector 56 and a data output line 57.

In use of the system of Figs 3 and 4 with the receiver module 51 the transmitter unit 20 will, when enabled produce an output RF signal at the antenna 52. That signal may have a particular character as may be predefined by the identity unit 22.

The module 51 is able to receive signals at its antenna 52 and to produe a data output at line 57. The signal at 57 can be passed to the input 35 and if decoded by the decoder 32 as being of the appropriate character to produce an output signal at 34 which can via the sound generator 36 and speaker 37 produce an alarm sound. Optionally if the switch 39 is closed the light 38 can be used as a warning light.

The variant module 60 shown in Fig. 6 is a variant on the output unit 30 and comprises a similar input 35, a decoder 62 an output line 64, a sound generator 66, a speaker 67, a switch 69 and a light 68 and additionally includes an alpha character decoder 69 and a display 71.

The module 60 will operate similarly to the unit 30 except that the decoder 69 and display 71 can be used to display the character of a received signal.

The following is a discussion of various preferred aspects that the system might have.

# 1 RADIO FREQUENCY CONSIDERATIONS

## 1.1 Choice of Frequency

The fundamental requirement in this system is that of controlling the effective range over which the warning transmitter will be received.

The choice of radio frequency has to be such that building, trees and other obstacles do not impede the transmission path. Conversely, the choice of frequency must make it free from the effects of weather and minimise the radio interference mechanism due to this system. The interference mechanisms which may affect the performance of the warning system is also dependant on the frequency band selected.

The Department of Communications must approve and possibly license the choice of frequency and the transmitter respectively. Radio frequencies in the 150 Mhz to 1000 Mhz region fulfil the requirements of range, interference and simple design.

To achieve a range of 350 to 500 metres, the power level of the transmitter and the threshold sensitivity of the receiver must be controlled. Too broad a tolerance will make the desired ranging less predictable.

# 2. WARNING TRANSMITTER

## 2.1 Interconnection with Host Vehicle.

The warning transmitter assemble must be attached to the host vehicle (or control box). This implies a physical and electrical attachment.

In any instance, the warning transmitter will need to be activated whilst the warning lights are flashing. The envisaged power consumption of the warning transmitter is very low, which can enable the transmitter to be powered from the light circuit.

The warning transmitter must also have some form of antenna connected to it. The size of this antenna can be physically small regardless of the operating frequency (within the defined limits discussed above).

From an engineering viewpoint, and exterior antenna is desirable for the transmitter to provide a controlled radiation pattern from the host vehicle. The transmitter need not be mounted inside the cabin as there are no operator controls for it, although it is possible that the transmitter be fitted with a warning receiver. A transmitter-antenna combination package can be mounted beside the flashing lights and operated by the same power feed to the lights.

An alternative cabin mounting transmitter package which feeds an exterior antenna may be desirable after considering the operational aspects below.

## 2.2 Signalling Protocols

The method of signalling proposed here, forms the key to the flexibility, reliability and means of coping with real life situations.

The desirable considerations in formulating the signalling scheme are:
- Ability to identify the host vehicle.
- Ability to function with numerous host vehicles in one location.
- Ability for a host vehicle to detect other host vehicles even while operating normally.
- Fail safe operation.
- Only one radio frequency to be utilised for reasons of radio spectrum conservation.

These considerations given current technology capabilities, lead into the solution described without taking too many liberties.

The signalling protocol can be split into two requirements:

A. Interleaving

The use of a single frequency in the system operation and the need for handling numerous host vehicles in one location, points the need for a time division transmission. An example of this interleaving process will have the warning transmitter turned ON for 0.2 seconds and OFF for 1.2 seconds. Practical testing will yield a workable "wiming result.

B. Coding

Whilst the transmitter is turned on for the short period, it is modulated with a data code sequence identifying the host vehicle. The salient reason for the modulation, is to discourage spoofing by hackers, and to prevent false alarms being decoded in the receiver due to interference and noise. The final choice of data sequences will be up to the hardware designers, although the date rate will be defined by the actual frequency allocation from the Department of Communications.

A commercial system may include a method of forward error correction on the transmitted code sequence. This will provide a measure of security in the decoded vehicle identity with interference present. The error correction can be ignored in a simple 'warning only receiver'.

2.3 Hardware Requirements

The hardware requirements are dictated by a variety of electronic standards including those of the vehicle manufacturers. The specification has been left as open as possible to allow the hardware-software designers to work with emerging technology as well as creating market dependent variations.

Radio Frequency

Tolerances 2 ppm frequency
=-1 dB power output
Centre Frequency (to be defined)
Emission Designation (suggested 16F3)
Data modulation FM

Coding

Selectable data sequence generator for vehicle identification.

Vehicle Power

DC operation 6 Volts to 24 Volts
Fused supply

Positive or Negative earth supply
Less than 1 amp current drain

Mains Power

·220 to 260 Volts or 100 to 120 Volts

Environmental

Operation Temperature -30 C to +60 C
Storage Temperature -40 C to +85 C
Humidity 0% to 95%

Physical

Waterproof enclosure (exterior mount)
ABS plastic enclosure (cabin mount)

3. WARNING RECEIVER

3.1 Interconnection with Host vehicle

The ideas generated on the configuration of the warning receiver spell out 3 models.

A. Transmitter and receiver with full display for emergency vehicles.

B. Receiver with selectable display-audible or audible only.

C. Receiver (cheapest) with audible warning only.

The receiver would be powered from the accessory line of the motor vehicle and would be separately fused. It would not be able to be turned off from the drivers control (except the ignition switch).

An output line could be connected to external lamps or buzzers for taking control over an outside process.

3.2 Display alert mechanism

The mechanism of the alert generated from the receiver can take the following forms. Cost will be the limiting factor here, but all the possibilities are explored.

Display Type

Alphanumeric display (8 digits) similar in idea to a mobile telephone display or clock. Displays such as these below are possible.
e.g. POLICE
FIRE
AMBULANCE

RAIL
SERVICE
Flashing light in the cabin (Optional)

## Audible

Sound generator which activates for a 5 second period then goes into a ticking mode to show the continued presence of the warning.

## 3.3 Hardware requirements

The hardware requirements are dictated by a variety of electronic standards including those of the vehicle manufacturers. The specification has been left as open as possible to allow the hardware-software designers to work with emerging technology as well as creating market dependent variations.

### Radio Frequency

Centre Frequency (to be defined)
Date demodulation FM
Sensitivity - 85dBm Detection threshold 'est.

### Decoding

Selectable display with vehicle identification or audible warning only.

### Vehicle Power

DC operation 6 Volts to 24 Volts.
Fused Supply
Positive or Negative earth supply
Less than 1 amp current drain

### Output

A contact closure to earth to enable control over an external light or buzzer

### Environmental

Operational Temperature -30 C to +60 C
Storage Temperature -40 C to +85 C
Humidity 0% to 95%

### Physical

Waterproof enclosure (exterior mount)
ABS plastic enclosure (cabin mount)

## 4. OPERATIONAL CHARACTERISTICS

### 4.1 Congestion Modes

It is to be expected that in an emergency situation, numerous vehicles will be in attendance each carrying a warning transmitter. It will be through practical testing that the robustness of the warning system will be determined.

The operation in congestion is mode assuming the transmitters are all turned on at different times. This is in fact what will happen and enables each transmission to be interleaved. A point will be reached where the probability of two transmitters coming on together, causing loss of data (The use of error correction coding will help reduce this loss). Sufficient data could be received to provide warning only as opposed to vehicle identification.

A by product of this scheme permits a host vehicle to listen for other warning transmitters whilst its own transmitter is in the OFF state. This allows EVERY motor vehicle to receive warnings.

### 4.2 Use Operation

The user of the warnings system need not even be aware of the product being fitted, although an up market product can have the user selecting between audible warning only or display with audible warning.

### 4.3 Documentation

The documentation supplied with the product should include:
- Installation Guide
- Troubleshooting Guide
- User manual (all users)
- Service manual (factory/repair centre only)

The claims form part of the disclosure of this specification.

Modifications and adaptations may be made to the above described without departing from the spirit and scope of this invention which includes every novel feature and combination of features disclosed herein.

## Claims

1. An emergency or warning signal system characterized by transmitter unit (2) adapted to be associated with an emergency vehicle or warning device and actuable to transmit a first signal and a receiving unit (6) adapted to be associated with a road vehicle and adapted to receive said first signal and in consequence thereof to produce in use a second signal (8) perceivable to a user of said road vehicle.

2. A system as claimed in claim 1, characterized in that said transmitter unit (2) and said receiver unit (8) are such as to have an effective range of not less than 100 metres and not more than 1000 metres

3. A system as claimed in claims 1, characterized in that said transmitter unit (2) and said receiver unit (8) are such as to have an effective range of not less than 200 metres and not more than 500 metres.

4. A system as claimed in any preceding claim, characterized in that the transmitting unit (2) is actuable to transmit said first signal on actuation of other signal means such as lights, sirens or other sound generating means.

5. A system as claimed in any preceding claim, characterized in that the receiving unit (8) is such as to be adapted to be placed in a condition to receive said first signal and to produce said second signal at all times that said road vehicle is in use.

6. A system as claimed in any preceding claim, characterized in that the receiving unit (8)is associated with a car radio, tape player or other sound reproduction apparatus suitable for use in a motor vehicle and means is provided to at least diminish or suppress any sound signal being emitted by said car radio, tape player or other sound reproduction apparatus at such time as said second signal is being produced.

7. A system as claimed in any preceding claim characterized in that the receiver unit (8) utilizes amplifier and/or speacker means of a car radio, tape player or sound reproduction apparatus suitable for use in a motor vehicle.

8. The transmitter (2) or receiver unit (8) of any preceding claim.

FLASHING

LIGHT

EMERGENCY LIGHTS
ON EMERGENCY VEHICLES
POLICE
FIRE
AMBULANCE
RAIL CROSSING

TRANSMITTER

PULSE

GENERATOR

POWER SOURCE (12V)

FIG. 1.

9

CAR
ANTENNA

CAR
RADIO

8

6

WARNING
RECEIVER
(Motor Vehicle)

(Audio to
Radio Speakers)

7

INDICATORS
(Visual)

POWER

FIG. 2.

FIG. 3.

DC. POWER INPUT

POWER REGULATOR — 21

POWER FEED TO EACH SYSTEM

RF GENERATOR — 26

ON/OFF KEYING — 27

EXTERIOR ANTENNA — 28

CODE GENERATOR — 23

20

PLUG IN IDENTITY MESSAGE & DIGIT ALPHA — 22

CLOCK CONTROL — 24

DC POWER INPUT

POWER REGULATOR

31

POWER FEEDS

35

30

BASIC DATA DECODER

32

33

CLOCK CONTROL

34

ALARM OUTPUT

SOUND GENERATOR

36

LIGHT

39

38

SPEAKER

37

FIG. 4.

EXTERIOR
ANTENNA

$\overline{\text{IIIG}} . 5 .$

52

MIXER

53

50

56

AMPLIFIER
DETECTOR

54

LOCAL
OSCILLATOR

57

DATA
OUTPUT

35

60

62

BASIC DATA
DECODER

64

63

ALPHA
CHARACTER
DECODER

ALARM
OUTPUT

66

SOUND
GENERATOR

69

71

67

68

LIGHT

DISPLAY

SPEAKER

$\overline{\text{IIIG}} . 6 .$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 125 161 (HINKEL)<br>* Whole document *<br>--- | 1-8 | B 60 Q 1/52 |
| X | DE-A-2 625 842 (HOCHREIN)<br>* Page 1, figure 1 *<br>--- | 1 | |
| A | DE-A-1 630 720 (LICENTIA PATENT VERWALTUNGS-GmbH)<br>* Page 9 *<br>----- | 1 | |

TECHNICAL FIELDS
SEARCHED (Int. Cl.4)

B 60 Q

The present search report has been drawn up for all claims

| Place of search | Date of completion of the search | Examiner |
|---|---|---|
| THE HAGUE | 26-09-1988 | ONILLON C.G.A. |